# EUROPEAN PATENT SPECIFICATION

(11) **EP 3 599 676 B1**
(45) Date of publication and mention of the grant of the patent: **30.06.2021**
(21) Application number: 18214134.1
(22) Date of filing: 19.12.2018
(51) Int. Cl.: H01R 25/16, H01R 43/02

(54) **METHOD FOR CONNECTING AN ELECTRICAL COMPONENT TO A BUSBAR, FLAT BUSBAR AND A SYSTEM REALIZED BY SUCH A METHOD**
VERFAHREN ZUR VERBINDUNG EINER ELEKTRISCHEN KOMPONENTE MIT EINER STROMSCHIENE, FLACHE STROMSCHIENE UND DURCH SOLCH EIN VERFAHREN REALISIERTES SYSTEM
PROCÉDÉ DE CONNEXION D'UN COMPOSANT ÉLECTRIQUE À UNE BARRE DE BUS, BARRE DE BUS PLATE ET SYSTÈME RÉALISÉ PAR UN TEL PROCÉDÉ

(30) Priority: 26.07.2018 EP 18185698
(43) Date of publication of application: 29.01.2020
(73) Proprietor: Rogers BV, 9940 Evergem (BE)
(72) Inventor: DANEELS, Jan, 9940 Evergem (BE); SHI, Ben, Suzhou, Jiangsu 215122 (CN); TANG, Crystal, Suzhou 215122 (CN)
(74) Representative: Müller Schupfner & Partner Patent- und Rechtsanwaltspartnerschaft mbB

(56) References cited:
- EP-A2- 2 034 809
- WO-A1-2017/021311

## Description

The present invention concerns a method for connecting an electrical component to a busbar, a flat busbar and a system realized by such a method.

Laminated busbars typically comprise layers of fabricated copper separated by thin dielectric materials, laminated to form a unified structure. Examples for laminated busbars can be found in CN 203 504 394 U, CN 104 022 414 A1 or CN 202 474 475 U. Usually a "plug-in" region is included into the busbar, in order to connect electrical poles of an electronic component, such as a capacitor directly to different conductive layers, wherein each of the conductive layers is assigned to a type of the poles provided by each capacitor. Typically, the capacitors are connected to the plug-in region by inserting a pin into a hole of the plug-in region. Subsequently, the pins are adhesively connected to the busbar, for example by soldering and/or welding.

WO 2017 021 311 A1 discloses a busbar, having at least one base body which is plate-shaped in some sections, with a top and a bottom, comprising a conductor layer and at least one first and second insulation layer, connected to the conductor layer, and with a plurality of connectors, wherein at least one connector comprises at least one connection area and a through-passage opening, positioned centrally in the connection area and extending along a central axis MA, and wherein in the connection area the first and second insulation layer are removed over some of the surface area, in which the connection area is segmented into a plurality of connection segments.

EP 2 034 809 A2 deals with an electronic device including a printed circuit board and an electronic element having a terminal. The terminal has a surface section and an insertion section. The printed circuit board includes a through hole extending from a first surface to a second surface of the printed circuit board, a surface land disposed on the first surface, and an insertion land integrally disposed on a sidewall of the through hole and on a periphery around the through hole.

In particular, it is typically provided that the pins of the capacitor are inserted into the plug-in region, in particular by reaching through the busbar. The pins, reaching thought the busbar, are usually connected to the busbar by soldering the pin to the corresponding conductive layer at an outer surface of the busbar facing away from electronic component. As a result, the soldering material used for soldering the pin to the busbar as well as the pin protrudes from the outer surface facing away from the electronic component. Therefore, an uneven outer surface of the busbar is provided that prevents the busbar from a direct flat arrangement next to another component. That limits the potential applications of the busbar.

Starting from that, it is an object of the present invention to improve the laminated busbars known in the state of the art, in particular with respect to their production and their potential fields of applications.

This object is achieved by the method according to claim 1, a flat busbar according to claim 15 and the system according to claim 16. Preferred embodiments are incorporated in the dependent claims, the description and the figures.

According to a first aspect of the present invention a method for connecting an electrical component, such as a capactitor, to a busbar is provided, in particular to a laminated busbar, wherein the busbar is configured for mounting the electronic component on the busbar, in particular a passive electronic component, and has at least one plug-in region configured for inserting a contact element of the electronic component, in particular a pin of the electronic component, into the at least one plug-in region, wherein the at least one plug-in region is formed as a recessed plug-in region, comprising:
- inserting a contact element into the at least one plug-region and
- using a soldering and/or brazing material for soldering the contact element to the busbar,
wherein the recessed plug-in region is filled with the soldering and/or brazing material without protruding from an outer surface of the busbar in a finished state, wherein the outer surface faces away from the electronic component.

In contrast to the state of the art, it is provided that the soldering/brazing material is stored in the finished state inside the recessed plug-in region such that the brazing material and/or the soldering material does not protrudes from the outer surface of the busbar. As a consequence, a flat surface is provided that allows a direct alignment adjacent to another component. Preferably, it is provided that the amount of used soldering/brazing materials is adapted such that the soldering material does not protrude from the recessed plug-in region. As a consequence, no further treatment is necessary for forming the flat outer surface without protrusions or irregularities. Alternatively, it is considerable that a treatment process after soldering provides soldering and/or brazing materials that does not protrude from the recessed plug-in region or the outer surface of the busbar facing away from the electronic component. In particular, it is provided that the outer surface of the busbar (with exception of the recesses plug-in regions) forms an even plane and the feature "not protruding from an outer surface of the busbar" means that the soldering material does not cross an imaginary plane extending through the even plane of the outer surface of busbar in the finished state. Furthermore, it is preferably provided that the electronical component, for example its bottom side, abuts, in particular directly abuts, the busbar.

According to a preferred embodiment it is provided that the busbar comprises a first conductive layer, wherein said first conductive layer which is assigned to the plug-in region extends in a first plane and the plug-in region extends in a second plane, wherein the first plane and the second plane are spaced from each other in a direction extending perpendicular to the first plane and the second plane for forming the recessed plug-in region. Preferably, it is provided according to the present invention to realize a recessed plug in-region by spacing the first and second plane from each other. As a consequence, it is possible to provide a flat surface, even after the pin is connected to the busbar, for example by soldering, since the pin and/or a soldering material can fill the recessed plug-in region and does no longer protrude from the surface of the busbar. In particular, it is advantageously possible to connect the busbar being equipped with the capacitors to another component, in particular to another flat component, for instance in a vehicle. Therefore, the busbar can be used in different fields of application. Preferably, the recessed plug-in region represents a bottom of a pot-like shape of the first conductive layer or itself is at least partially pot-like shaped.

In particular, the busbar comprises a second conductive layer, wherein the first conductive layer and the second conductive layer are separated from each other by an isolation layer. In particular, the first conductive layer, the second conductive layer and the isolation layer forms a sandwich system. Preferably, the laminated busbar comprises a further isolation layer covering the sandwich system including the first conductive layer, the isolation layer and the second conductive layer. Furthermore, it is provided that the busbar has a rectangular or disk-like shape for carrying several electrical components such as capacitors, in particular arranged in rows being adjacent next to each other. In principle, the main function of the busbar is to collect an electrical power provided by the several capacitors and provide the collected electrical power by corresponding terminals to a user or a machine, for example by corresponding terminals connected to the first conductive layer and/or the second conductive layer.

The term "assigned" means that there is an electrical connection between the plug-in region and the first conductive layer. In particular, the plug-in region is incorporated into the first conductive layer or is an integral part of the conductive layer. For example the plug-in region is realized by deforming a part of the first conductive layer, in particular by stamping. However, it is also thinkable that the plug-in region is added to the conductive layer in a separate manufacturing step. Moreover it is also provided that the second conductive layer has a further plug-in region, wherein the second conductive layer extends along a further first plane and the further plug-in region extends along a further second plane, wherein the further first plane and the further second plane are separated from each other. In particular the distance separating the further first plane and the further second plane differs from the distance separating the first plane and the second plane.

Preferably, it is provided that the recessed plug-in region is pot shaped and the pot shaped, recessed plug-in region is at least partially filled with the soldering and/or brazing material. Using a pot shaped, recessed plug-in region has the benefit of collecting automatically the soldering material inside the pot-shaped recessed plug-in region, in particular in the center of the recessed plug-in region. Preferably, the connection between the busbar and the electronic component is realized in the center of the recessed plug-in region. In particular, it is possible to avoid that the soldering material flows away from the contact region between the contact element and the busbar and is concentrated in the relevant region, i. e. the center, by the pot-shaped plug-in region.

In particular, it is provided that at least one side wall of the pot-shaped, recessed plug-in region extends slanting, in particular to a direction perpendicular to the main extension plane of the busbar. The slanted side walls advantageously support the flow of the soldering material to the center of the recessed plug-in region that is intended for establishing the soldered connection between the busbar and the electronic component.

It is also considerable that soldering and/or brazing material protruding from the outer surface of the busbar is removed, in particular before the finished state is realized. For example, at least a part of the soldering and/or brazing material is removed before the soldering and/or brazing material is hardened, for example by a suction process and/or by mechanically removing the soldering and/or brazing material. It is also considerable that by timing the removing process it is controlled how much soldering and/or brazing material is left inside the recessed plug-in region. Alternatively, the soldering and/or brazing material is removed after hardening of the soldering and/or brazing material.

According to a preferred embodiment, it is provided that the plug-in region is at least partially surrounded by at least one recess, wherein the recess preferably extends between the first plane and the second plane. Due to the recess it is possible to limit or restrict a heat transport from the plug-in region to the first conductive layer. As a consequence, the heat generated and needed for soldering is not dissipated to the conductive layer. Instead, the heat is concentrated to the plug-in region for realizing the adhesive or soldering or brazing connection between the pin and the plug-in region. Preferably, the form of the recess is adapted to limit or to reduce a heat transfer from the plug-in region to the conductive layer. In particular, it is provided that the recess is configured, for example in size, number and/or form, such that a heat transfer from the plug-in region to the first conductive layer is reduced about more than 10 %, preferably more than 25 % and most preferably more than 35 % compared to a corresponding plug-in region being connected to first conductive layer without recess or recesses.

It is preferably provided that the plug-in region is connected to the conductor layer of the busbar via a bridge element, such as a rip element, for realizing an electrical connection between the plug-in region and a conductive layer of the busbar. The bridge element takes care for establishing an electrical conductive connection between the plug-in region and the first conductive layer. Preferably, the bridge-element is formed as a rip element. Such a rip element extends mainly radially from a center of the plug-in region. It is also conceivable that the plug-in region is connected to the first conductive layer via several rip elements that for instance extend radially from the center of the plug-in region. For example, the plug- in region is connected to the first conductive layer via two, three or four rip element. Preferably two rip elements are arranged at opposite ends or the plug-in region.

In another embodiment, it is provided that along a surrounding path a first part is assigned to the at least one recess or the recesses and a second part is assigned to the bridge element, wherein the surrounding path preferably has the form of the plug in region. In particular, it is provided that the plug-in region is limited by the recesses. The plug-in region in the second plane might have a cross section being formed circularly, elliptically, rectangularly or the like. Preferably there are several recesses provided, wherein the recesses are separated from each other along the surrounding path, especially homogeneously. In particular, the surrounding path represents as closed path that surrounds the plug-in region. For example, the surrounding path is adapted to the plug-in region, i. e. the surrounding path extends parallel to a circumference of the plug-in region. Preferably, the recessed plug-in region is formed by micro-dishing.

Furthermore, it is provided that a relation of the first part to the length of the surrounding path is between 0.5 and 0.95, preferably between 0.7 and 0.95 and more preferably between 0.75 and 0.95. By choosing such small bridge elements it is advantageously possible to reduce the heat transfer during the connection between the pin and the plug-in region substantially, at least by 20 % or 50 %. Simultaneously, it has shown that the comparable thin bridge-elements are able to withstand/resist the pressure during a soldering process, in particular during an automated soldering process.

Preferably, it is provided that
- an area of a first cross section encloses the recess and/or recesses and the plug-in region, and
- an area of a second cross section encloses the plug-in region,
wherein a relation between the area of the first cross section and the area of the the second cross section is between 0.1 and 0.5, preferably between 0.2 and 0.4 and more preferably between 0.25 and 0.35. Thus, a comparable small area between the plug-in region and the conductive layer is provided for the recess or the recesses. In other words: the recesses are not extending too much into the first conductive layer. Instead the recesses are located near to the plug-in region. As a consequence, the influence of the recesses on the first conductive layer is small. In particular the recess has a strip like shape and mainly extends arched around the plug-in region. Further, the plug-in region has a disk-shaped form, in particular a circular or ring disk shaped form.

According to another embodiment it is provided that an area or a third cross section is assigned to the recess and/or the recesses, wherein a relation between the area of the third cross section to the area of the second cross section is between is between 0.5 and 1.5, preferably between 0.7 and 1.3 and most preferably between 0.9 and 1.1. In other words: the plug-in region is comparable to the area formed by recesses that surrounds the plug-in region. Thus, it is advantageously possible to concentrate the heat generated for forming the adhesive connection between the pin and the plug-in region to a comparable small area or region.

According to another embodiment it is provided that the plug-in region comprises a hole, wherein a form of the hole is adapted to a form of the contact element of the electronic component, in particular such that the contact element can be inserted into the hole according to a key-lock principle. For example, the plug-in region has a circular or elliptical shape and a corresponding cross section of the pin has a complementary shape. By adapting the hole and pin in a key-lock principle it is advantageously possible to avoid that an inadequate capacitor is connected to the busbar. It is also conceivable that the position of different plug-in regions is adapted to avoid that an inadequate capacitor is connected to the busbar.

In particular, it is provided that the soldering and/or brazing material extends through the hole, in particular in the finished state. As a consequence, it is advantageously possible to arrange soldering and/or brazing material above and under the plug-in region for enhancing the adhesive connection between the busbar and the contact element of the electronic component. Preferably, it is provided that the hole in the recessed plug-in region is sized such that a slit is realized between the inserted contact element and the plug-in region that controls the amount of soldering material that can reach through this slit in an area between the electronic component and the busbar.

In a preferred embodiment of the present invention, it is provided that in a direction perpendicular to the first plane and the second plane a distance between the first plane and the second plane is greater than a half of a thickness of the conductive layer, preferably greater than the thickness of the conductive layer and more preferably greater than twice the thickness of the conductive layer. Thus, it is advantageously possible to use almost a whole thickness of the busbar for forming the recessed plug-in region. Consequently, a comparable big volume is provided to the pin and the soldering material.

In another embodiment, it is provided that the bridge element has a curved shape for providing a distance between the first plane and the second plane. In particular, the bridge-element extends perpendicular or slanted to the first plane and/or the second plane.

It is preferably provided that the busbar comprises a second conductive layer being spaced from the first conductive layer by an isolation layer, wherein in the second conductive layer and/or the isolation layer, a recess is provided, wherein the size of the recess in the conductive layer and/or the isolation layer mainly corresponds to an area of the first cross section area. Thus, it is advantageously possible to stack the first conductive layer, the isolation layer and the second conductive layer, wherein the recessed plug-in region reaches through the second conductive layer and/or the isolation layer.

Furthermore, it is provided that the recessed plug-in region for the second conductive layer is formed by a recess in the first conductive layer and/or the isolation layer, wherein the second conductive layer is arranged between the first conductive layer and the electronic component. Since the second conductive layer is not arranged at the outer surface of the busbar, there is no need for an recessed plug-in region because the recess in the first conductive layer and/or in the isolation layer allows placing the soldering and/or brazing material such that the soldering and/or brazing material does not extends from the outer surface of the busbar. As a consequence, it is possible to avoid the production of the recessed plug in region in the second conductive layer. However, it is also conceivable hat second conductive layer also has a recessed plug in region in an alternative embodiment. Preferably, it is provided that another component is arranged next to the outer surface of the busbar facing away from the electronic component. For example, the another component is a cooling device that is directly connected to the busbar. In particular, the another component contacts the busbar flatly, without forming a space between the busbar and the electronic component.

Another aspect of the present invention is a busbar, in particular a laminated busbar, configured for mounting an electronic component on the busbar, in particular a passive electronic component, wherein the busbar comprises at least one plug-in region configured for inserting a contact element of the electronic component, in particular a pin of the electronic component, into the busbar, wherein plug-in region is at least partially surrounded by at least one recess, wherein the recess preferably extends between the first plane and the second plane.

Furthermore, it is preferably provided that a contact element of an electronic component is inserted into a plug-in region of the busbar, wherein the contact element is soldered, preferably automatically by a robot. By using a robot, forming the connection between the plug-in region and the pin can be accelerated advantageously.

According to another embodiment of the present invention, it is provided that the contact element is a pin and the pin
- is bent and/or cut before soldering and/or
- is arranged inside the recessed region without protruding from the outer surface of the busbar.

By limiting the extension of the pin, it is advantageously possible to avoid that the pin extends over the outer surface of the busbar. It is also thinkable that parts that protrude from the surface of the busbar are removed after the soldering, welding and/or bending. As a consequence, a flat surface of the busbar can be guaranteed.

Preferably, it is provided that the recessed plug-in region is completely filled with soldering and/or brazing material. Thus, a stable connection between the busbar and the contact element is realized.

The invention also concerns a flat busbar, configured for mounting an electronic component on such busbar, comprising at least one plug-in region configured for inserting a contact element of the electronic component, in particular a pin of the electronic component, into the at least one plug-in region, wherein the at least one plug region is formed as a recessed plug-in region, wherein the recessed plug-in region is filled with a soldering and/or brazing material without protruding from an outer surface of the busbar in a finished state, wherein the outer surface faces away from the electronic component.

The aforementioned features relating to the inventive method are also applicable to or for the flat busbar, respectively, especially as far as these features are structural features relating to the busbar itself, which is then suitable to be used in the method described above and cooperates or matches with the electronic component, which is a component known from prior art.

Another aspect of the present invention is a system comprising a busbar and an electronic component, wherein the electronic component is connected to the busbar by a method according to the present invention. All features and/or benefits described for the method applies analogously to the system and vica versa. Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically shows a perspective view on a busbar for a method according to the present invention,
- **Fig. 2**: schematically shows a side view of the busbar from figure 1,
- **Fig. 3**: schematically shows a first conductive layer including a plug-in region for the busbar for a method according to the present invention,
- **Fig. 4a**: schematically shows the plug-in region of the busbar for a method according to the present invention in a top view,
- **Fig. 4b**: schematically shows the plug-in region of the busbar for a method according to the present invention in a cross sectional side view,
- **Fig. 5**: schematically shows a busbar according to a second preferred embodiment for a method according to the present invention of the present invention
- **Fig. 6**: schematically shows a system comprising a busbar and an electronic component before soldering,
- **Fig. 7**: schematically shows a system comprising a busbar and an electronic component after soldering and
- **Fig. 8**: schematically shows a system comprising a busbar, an electronic component after soldering and another component

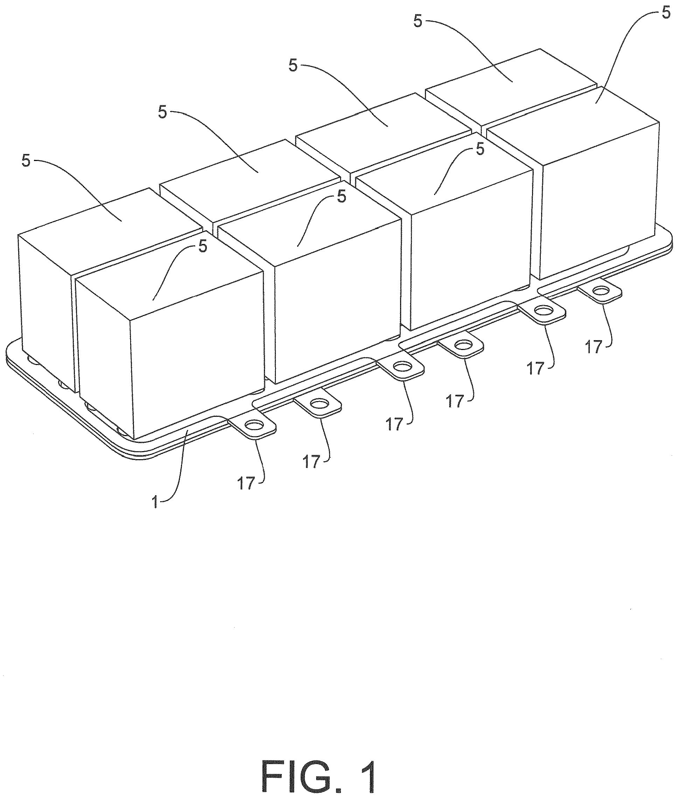

In **Figure 1**, a busbar 1 according to an exemplary embodiment of the present invention is illustrated. In particular, the busbar 1 is designed as a laminated busbar, comprising at least a first conductive layer 10 and a second conductive layer 20 that are separated by at least one isolation layer 15. Both the first conductive layer 10 and the second conductive layer 20 are provided to collect and to conduct a current caused by several capacitors 5 being arranged on the busbar 1 and respectively connected to the first conductive layer 10 and the second conductive layer 20.

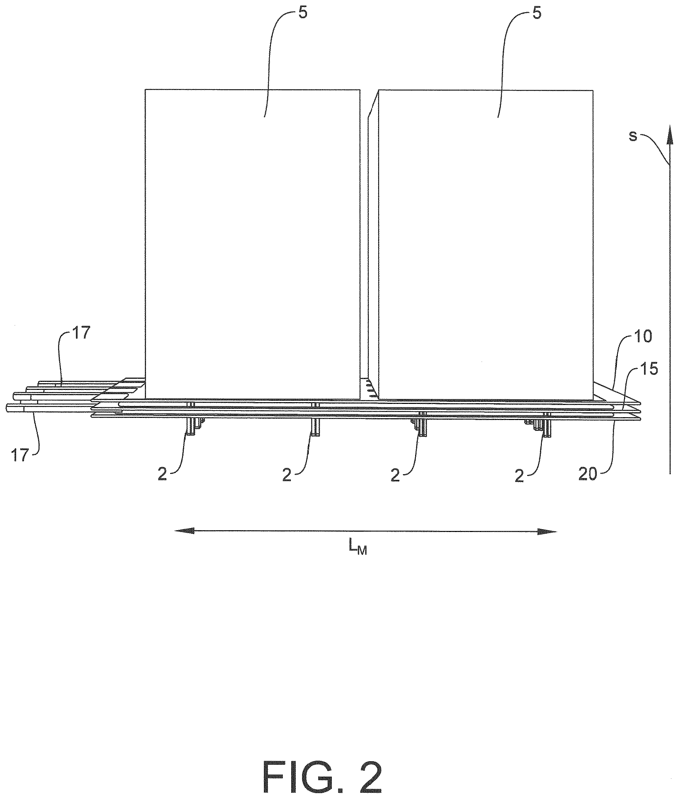

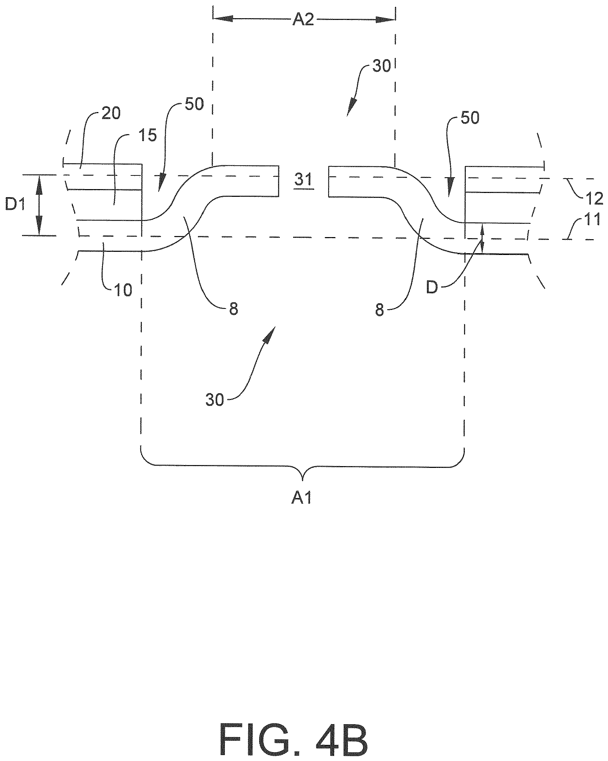

Especially, the first conductive layer 10 and/or the second conductive 20 layer are made out of a metal, in particular copper and/or aluminium. Preferably, the first conductive layer 10, the second conductive layer 20 and the isolation layer 15 are extending parallel to each other and are stacked on each other along a stacking direction S being perpendicular to a main extending plane M (Fig. 2). In the illustrated embodiment there are eight capacitors 5 being located on the busbar 1. The first conductive layer 10 and the second conductive layer 20 are respectively connected to one electrical pole of each of the capacitors 5. For providing the electrical power, the first conductive layer 10 and/or the second conductive layer 20 each comprise at least one terminal 17 for delivering a certain voltage provided by the capacitor arranged on the busbar. Further, it is provided that the first conductive layer 10 extends in a first plane 11 and preferably the corresponding terminal 17 of the first conductive layer 10 extends in the first plane 11, too (Fig. 4b).

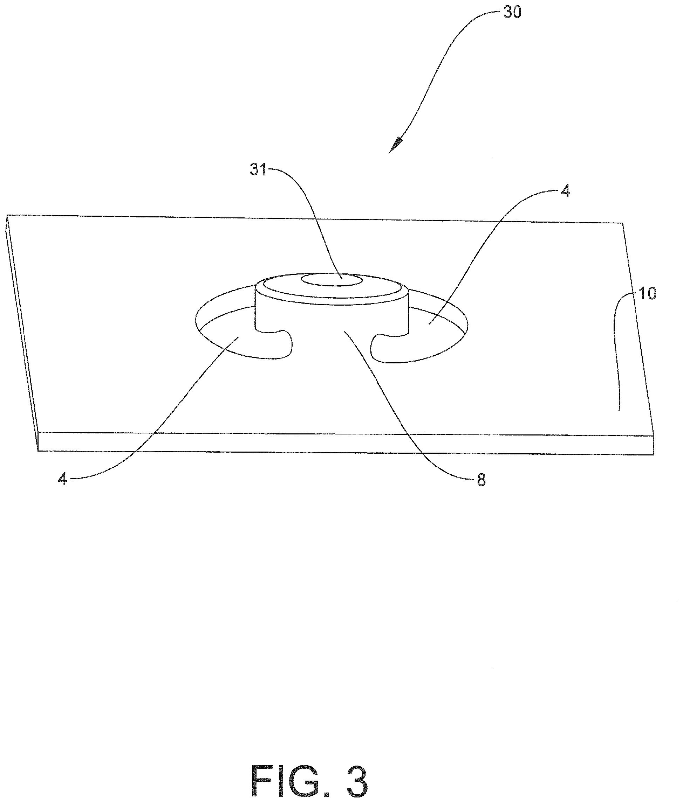

In **Figure 2****,** a side view of the busbar 1 having the capacitors 5 being arranged on the busbar 1 is illustrated. As illustrated the connection between each capacitor 5 and respectively the first conductive layer 10 and the second conductive layer 20 is realized by pins 2. Preferably, each capacitor 5 has a pin 2 assigned to a positive pole of the capacitor 5 and a pin 2 assigned to a negative pole of the capacitor 5. Both pins 2 reach through the busbar 1, wherein one pin 2 of each capacitor 5 is connected to the first conductive layer 10 and the other pin 2 is connected to the second conductive layer 20. For example, it is provided that all negative poles are connected to the first conductive layer 10 and all positive poles of the capacitors 5 are connected to the second conductive layer 20. For connecting the respective pins 2 to the first conductive layer 10 and the second conductive layer 20, plug-in regions 30 are provided (Fig. 3). Preferably, for each pin 2 one plug-in region 30 is provided. The plug-in region 30 comprises a hole 31 that is adapted in its shape to the form of the pin 2 so that the pin 2 can be inserted into the hole 31 by a movement in a direction perpendicular to the first plane 11 and/or parallel to the stacking direction S. In the case of a cylindrical pin, the hole 31 might have a circular shape. It is also conceivable that the pin 2 has a rectangular cross section and the hole 31 is formed rectangular in the same form. Preferably, the hole 31 and the cross section of the pin 2 are realized according to a key-lock principle.

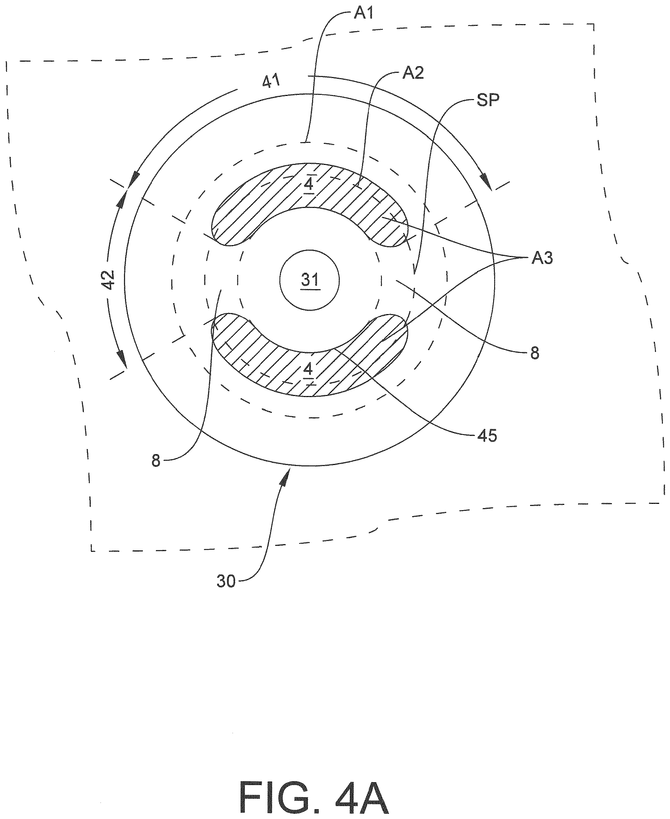

In **Figure 3****,** a detailed view on the plug-in region 30 is illustrated in a perspective view, wherein in turn in **Figure 4a** the plug-in region is presented in a top view and in **Figure 4b** in a cross-sectional view. In particular it is provided that the plug-in region 30, which is assigned/connected to the first conductive layer 10, extends to a second plane 12, wherein the second plane 12 is spaced/separated from the first plane 11. In other words, the plug-in region 30 is not located in the first plane of the first conductive layer 10 for forming a recessed plug-in region 30. Further, the plug-in region 30 is surrounded by at least one recess 4, in particular two recesses 4. The recesses 4 are intended for limiting a heat transfer during a soldering process that connects the pin 2 to the plug-in region 30. Without such recesses 4 the heat generated by the soldering would be directly transferred to the first conductive layer 10 and could not be used for soldering. The electrical connection between the first conductive layer 10 and the plug-in region 30 is established by a bridge element, in particular in form of a rip element 8. In the presented embodiment there are two rip elements 8 extending parallel to each other, in particular along a common line. Furthermore, it is provided that a size and form of the bridge element is adapted to the individual application intended for the busbar 1. For example, the size and form is adapted to the capacity of the capacitor 5 being arranged on the busbar 1. Preferably, the plug-in region 30 has a disk-like shape in general.

Preferably, it is provided that along a surrounding path SP surrounding the plug-in region 30
- a first part 41 is assigned at least to one recess 4 or to all recesses 4, and
- a second part 42 is assigned to the bridge element,
wherein the surrounding path SP especially corresponds to an outer shape 45 of the plug-in region 30 in the second plane 12 and/or the shape of the hole 31 of the plug-in region 30. For example the surrounding path SP corresponds to a circle being concentric to the hole 31 of the plug-in region 30. Furthermore, it is provided that a relation of the first part 41 to the length of the surrounding path SP is between 0.5 and 0.95, preferably between 0.7 and 0.95 and more preferably between 0.75 and 0.95. Furthermore, it is also conceivable that the recesses 4 are realized as a perforation or an assembly of holes, in particular holes being smaller than the hole 31 for inserting the pin, surrounding the plug-in region 30. Since the bridge-element establishes the electrical connection between the first conductive layer 10 and the plug-in region 30, it is provided that the bridge - element is curved or bent, in particular in a direction parallel to the stacking direction S.

Furthermore, it is provided that
- an area of a first cross section or area of a first cross section A1 encloses the recess 4 and/or recesses 4 and the plug-in region 30, and
- an area of a second cross section or area of a second cross section A2 encloses the plug-in region 30,
wherein a relation between the area of the first cross section A1 and the are of the second cross section A2 is between 0.1 and 0.5, preferably between 0.2 and 0.4 and more preferably between 0.25 and 0.35. Additionally, an area of a third cross section A3 is assigned to the recess 4 and/or the recesses 4, wherein a relation between the area of the third cross section to the area of the second cross section is between 0.5 and 1.5, preferably between 0.7 and 1.3 and most preferably between 0.9 and 1.1.

According to figure 4b, it is preferably provided that the second plane 12 of the plug-in region 30 extends parallel to the plane of the second conductive layer 20. A distance D1 measured in a direction parallel to the stacking direction S is preferably measured from a middle of the first conductive layer 10 to the middle of the plug-in region 30. Furthermore, it is provided that the second conductive layer 20 extends in the second plane 12. In particular, it is provided that the second conductive layer 20 and/or the isolation layer 15 have another recess 50 being configured such that the plug-in region 30 of the first conductive layer 10 can reach through the isolation layer 15 and onto or even beyond the recess 50 of the second conductive layer 12. Furthermore, a thickness D of the first conductive layer 10 is illustrated in figure 4b.

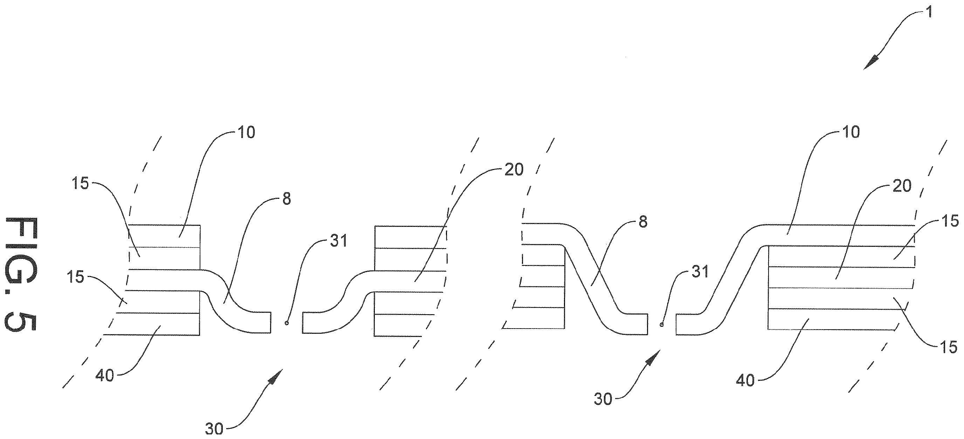

In figure 5, a busbar 1 according to a further preferred embodiment of the present invention is shown. The busbar 1 of figure 5 comprises a third conductive layer 40 in addition to the first conductive layer 10 and the second conductive layer 20. The third conductive layer 40 is arranged next to the second conductive layer 20 along the stacking direction S, wherein the second conductive layer 20 is spaced from the third conductive layer 40 in stacking direction S by another isolation layer 15. Preferably, it is provided that both the first conductive layer 10 and the second conductive layer 20 each have at least one plug-in region 31. In particular, the plug-in region 30 of the first conductive layer 10 and the plug-in region 30 of the second conductive layer 20 are configured such that they finish in stacking direction S in a common plane, preferably in a plane being assigned to the outer side of the busbar 1. Preferably, the plug in-region 30 of the second conductive layer 20 and the plug-in region 30 of the first conductive layer 10 are flush with the third conductive layer 40. For that, the rip element 8 of the plug - in region 30 of the first conductive layer 10 extends longer in stacking direction S compared to the rip element 8 of the plug in region 30 of the second conductive layer 20. As a consequence of this arrangement, a height of all solderings is the same. Furthermore, it is conceivable for the skilled person to realize such an arrangement with even more than three conductive layers 10, 20, 40.

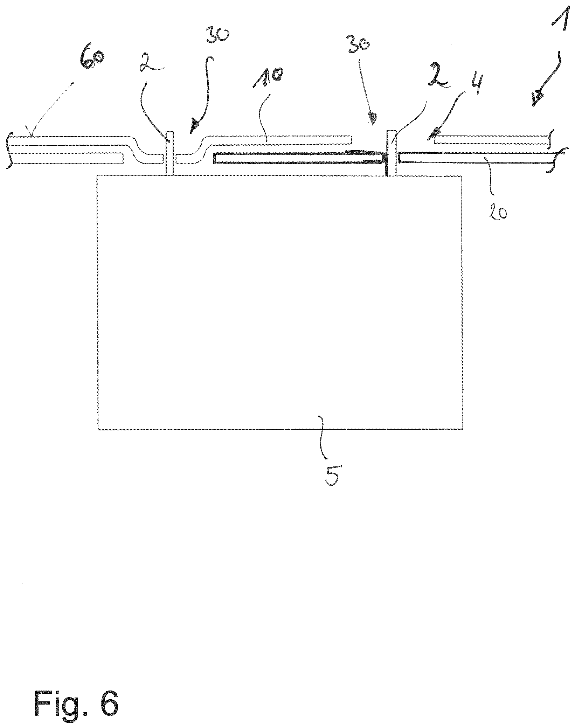

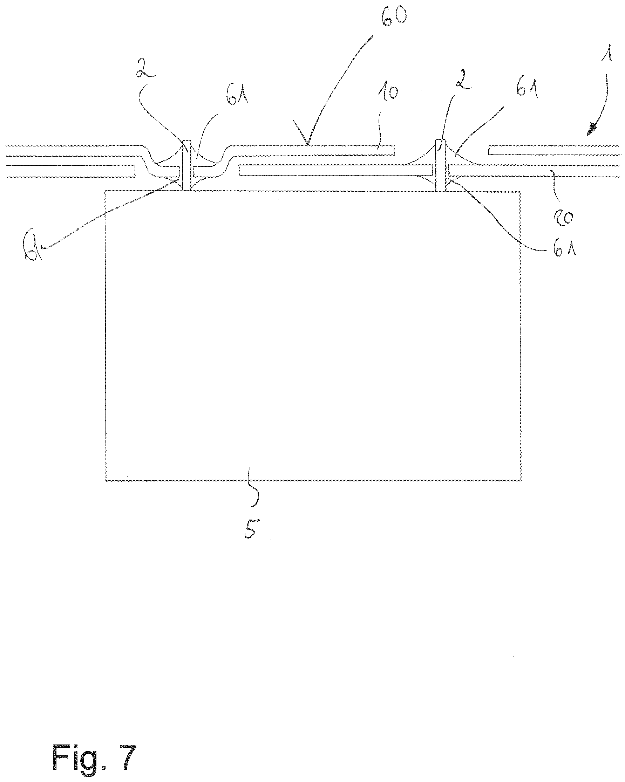

In the figures 6 to 8, a method for connecting a busbar 1 to an electronical component 5 according to a preferred embodiment of the present invention is illustrated. Preferably, the busbar 1 comprises a first conductive layer 10 and a second conductive layer 20 that are arranged above each other along the stacking region S. Furthermore, the first conductive layer 10 and the second conductive layer 20 have each a plug-in region 30 being intended for receiving a corresponding contact element 5, preferably a corresponding pin 2. In particular, the plug-in region 30 of the first conductive layer 10 is formed as a recessed plug-in region 30 in the first conductive layer that is recessed relative to an outer surface 60 of the busbar 1, wherein the outer surface 60 faces away from the side of the busbar 1 being connected to the electrical component 5. I. e. the first conductive layer 10 is formed such that the first conductive layer 10 provides the recessed plug-in region 30 by its shape. In the embodiment of the figures 6 to 8, only the first conductive layer 10 has a recessed plug-in region 30 being realized be the first conductive layer 10, whereas the second conductive layer 20 itself does not realize the recessed plug-in region by its shape. Instead for forming the recessed plug-in region 30, the first conductive layer 10 and/or an insulation layer 15 have another recess 50 above the plug-in region 30 of the second conductive layer 20 for forming the recesses plug-in region 30 . Alternatively, the second conductive layer 20 has also a recessed plug-in region 30 that is recessed relative to the outer surface 60 of the busbar 1. Furthermore, it is considerable that the recessed plug-in region 30 of the first conductive layer 10 and/or the second conductive 20 layer are formed as described in the previous figures 1 to 5. Especially, the recessed plug-in region 30 in the first conductive layer has a pot-like shape, in particular in a cross sectional view in a plane being mainly parallel to the stacking direction S. Preferably, the recessed plug-in region 30 is realized by or forms a micro dishing.

Furthermore, it is provided that the pins 2 of the electronical component 5 reaches through the first conductive layer 10 and/or the second conducive layer 20. In particular, the pins 2 reaching through the first conductive layer 10 and/or second conductive layer 20 do not extend further the outer surface 60 in a direction parallel to the stacking direction S.

After arranging the electronic component 5 and the busbar 1 according to the arrangement illustrated in figure 6, it is provided that the busbar 1 and the electronical component 5, in particular its pin 2, are permanently, in particular adhesively, connected to each other by soldering. Thereby, it is preferably provided that an soldering and/or brazing material 61 used for soldering is filled in the recessed plug-in region 30 of the first conductive layer 10. In particular, the recessed plug - in region 30 is filled such that the soldering and/or the brazing material 61 does not protrude from the outer surface 60 of the busbar 1 facing away from the electronic component 5.

Furthermore, it is provided in the embodiment shown here that the first conducive layer 10 has another recess 50 in the region of the plug-in region 30 of the second conductive layer 20. Thus, it is possible connect a pin 2 to the second conducive layer 20 by soldering such that the soldering material 61 does not protrudes from the outer surface 60 of the busbar 1. In particular, the soldering and/or brazing material 61 for connecting the second conductive layer 20 and the pin 2 is arranged inside the another recess 50 of the first conductive layer 10. Especially, an end of the pin 2 and/or the soldering and/or brazing material 61 flushes with the outer surface 60 of the busbar 2.

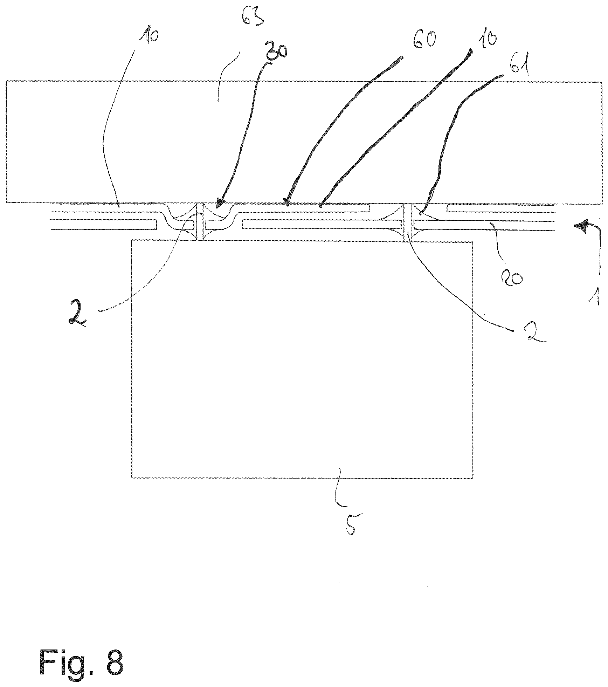

As a result of using the recessed plug-in region 30 for storing the soldering and/or brazing material 61, neither the pin 2 nor the soldering/brazing material 61 protrudes from the first conductive layer 10 or the outer surface 60 of the busbar 1. Therefore, a flat outer surface facing away from the electronic component 5 is realized. This flat outer surface 60 advantageously allows a flat contact to another component 63, such as a cooling device. As a consequence the system comprising the busbar 1 and the electronic component 5 being connected to the busbar 1 can be easily connected to another component 63, in particular by realizing a flat direct contact to the another component 63 without any spacing that is result of an element protruding from the outer surface 60 of the busbar 1, such as it illustrated in figure 8.

### Reference signs:

- 1: busbar
- 2: pin
- 4: recess
- 5: capacitor
- 8: rip element
- 10: first conductive layer
- 11: first plane
- 12: second plane
- 15: isolation layer
- 17: terminal
- 20: second conductive layer
- 30: plug-in region
- 31: hole
- 40: third conductive layer
- 41: first part
- 42: second part
- 45: outer shape
- 50: another recess
- 60: outer surface
- 61: soldering and/or brazing material
- 63: another component
- S: stacking direction
- M: main extending plane
- SP: surrounding path
- A1: first cross section
- A2: second cross section
- A3: third cross section
- D: thickness
- D1: distance

## Claims

1. Method for connecting an electrical component (5) to a busbar (1), in particular to a laminated busbar (1), wherein the busbar (1) is configured for mounting the electronic component (5) on the busbar (1) and has at least one plug-in region (30) configured for inserting a contact element of the electronic component (5), in particular a pin (2) of the electronic component (5), into the at least one plug-in region (30), wherein the at least one plug-in region (30) is formed as a recessed plug-in region (30), comprising:
- inserting a contact element into the at least one plug-region (30) and
- using a soldering and/or brazing material (61) for soldering the contact element to the busbar (1),
wherein the recessed plug-in region (30) is filled with the soldering and/or brazing material (61) without protruding from an outer surface (60) of the busbar (1) in a finished state, wherein the outer surface (60) faces away from the electronic component (5).

2. Method according to claim 1, wherein the busbar (1) comprises a first conductive layer (10), wherein said first conductive layer (10), which is assigned to the plug-in region (30), extends in a first plane (11) and the plug-in region (30) extends in a second plane (12), wherein the first plane (11) and the second plane (12) are spaced from each other in a direction extending perpendicular to the first plane (11) and the second plane (12) for forming the recessed plug-in region (30).

3. Method according to one of the preceding claims, wherein the plug-in region (30) is at least partially surrounded by at least one recess (4), wherein the recess (4) preferably extends between the first plane (11) and the second plane (12).

4. Method according to one of the preceding claims, wherein the recessed plug-in region (30) is pot-shaped and at least partially filled with the soldering and/or brazing material (61).

5. Method according to claim 4, wherein at least one side wall of the pot-shaped, recessed plug-in region (30) extends slanting, in particular relative to a direction perpendicular to the main extension plane (M) of the busbar (1).

6. Method according to one of the preceding claims, wherein soldering and/or brazing material (61) protruding from the outer surface (60) of the busbar (1) is removed.

7. Method according to one of the preceding claims, wherein the plug-in region (30) comprises a hole (31), wherein a form of the hole (31) is adapted to a form of the contact element of the electronic component (5), in particular such that the contact element is insertable into the hole (31) according to a key-lock principle.

8. Method according to one of the preceding claims, wherein the soldering and/or brazing material (61) extends through the hole (31).

9. Method according to one of the preceding claims, wherein in a direction perpendicular to the first plane (11) and the second plane (12) a distance (D1) tween the first plane (11) and the second plane (12) is greater than half of a thickness (D) of the first conductive layer (10), preferably greater than the thickness (D) of the first conductive layer (10) and more preferably greater than twice the thickness (D) of the first conductive layer (10).

10. Method according to one of the preceding claims, wherein another component (63) is arranged next to the outer surface (60) of the busbar (1) facing away from the electronic component (61).

11. Method according to one of the preceding claims, wherein the busbar (1) comprises a second conductive layer (20) being spaced from the first conductive layer (10) by an isolation layer (15), wherein the recessed plug-in region (30) for the second conductive layer (20) is formed by another recess (50) in the first conductive layer (10) and/or the isolation layer (15), wherein the second conductive layer (20) is arranged between the first conductive layer (10) and the electronic component (5).

12. Method according to one of the preceding claims, wherein the contact element is soldered to the plug-in region (30) automatically by a robot.

13. Method according to one of the preceding claims, wherein the contact element is a pin (2) and the pin (2)
- is bent and/or cut before soldering and/or
- is arranged inside the recessed region (30) without protruding from the outer surface (60) of the busbar (1).

14. Method according to one of the preceding claims, wherein the recessed plug-in region (30) is completely filled with soldering and/or brazing material (61).

15. Flat busbar (1), in particular a laminated busbar, configured for mounting an electronic component (5) on such busbar (1) comprising at least one plug-in region (30) configured for inserting a contact element of the electronic component (5), in particular a pin (2) of the electronic component (5), into the at least one plug-in region (30), wherein the at least one plug region (30) is formed as a recessed plug-in region (30), wherein the recessed plug-in region (30) is filled with a soldering and/or brazing material (61) without protruding from an outer surface (60) of the busbar (1) in a finished state, wherein the outer surface (60) faces away from the electronic component (5).

16. System comprising a busbar (1) and an electronic component (5), wherein the electronic component (5) is connected to the busbar (1) by a method according to one of the preceding claims.

## Patentansprüche

1. Verfahren zum Verbinden eines elektrischen Bauteils (5) mit einer Sammelschiene (1), insbesondere mit einer laminierten Sammelschiene (1), wobei die Sammelschiene (1) zur Montage des elektronischen Bauteils (5) auf der Sammelschiene (1) ausgebildet ist und mindestens einen Steckbereich (30) aufweist, der zum Einstecken eines Kontaktelements des elektronischen Bauteils (5), insbesondere eines Stifts (2) des elektronischen Bauteils (5), in den mindestens einen Steckbereich (30) ausgebildet ist, wobei der mindestens eine Steckbereich (30) als ausgesparter Steckbereich (30) ausgebildet ist, umfassend:
- Einsetzen eines Kontaktelements in den mindestens einen Steckbereich (30) und
- Verwenden eines Löt- und/oder Hartlötmaterials (61) zum Verlöten des Kontaktelements mit der Sammelschiene (1),
wobei der ausgesparte Steckbereich (30) mit dem Löt- und/oder Hartlötmaterial (61) ausgefüllt ist, ohne im fertigen Zustand von einer Außenfläche (60) der Sammelschiene (1) abzustehen, wobei die Außenfläche (60) von dem elektronischen Bauteil (5) abgewandt ist.

2. Verfahren nach Anspruch 1, wobei die Sammelschiene (1) eine erste leitfähige Schicht (10) aufweist, wobei die dem Steckbereich (30) zugeordnete erste leitfähige Schicht (10) in einer ersten Ebene (11) und der Steckbereich (30) in einer zweiten Ebene (12) verläuft, wobei die erste Ebene (11) und die zweite Ebene (12) in einer senkrecht zur ersten Ebene (11) und zur zweiten Ebene (12) verlaufenden Richtung zur Bildung des ausgesparten Steckbereichs (30) voneinander beabstandet sind.

3. Verfahren nach einem der vorhergehenden Ansprüche, wobei der Steckbereich (30) zumindest teilweise von mindestens einer Aussparung (4) umgeben ist, wobei sich die Aussparung (4) vorzugsweise zwischen der ersten Ebene (11) und der zweiten Ebene (12) erstreckt.

4. Verfahren nach einem der vorhergehenden Ansprüche, wobei der ausgesparte Steckbereich (30) topfförmig ausgebildet und zumindest teilweise mit dem Löt- und/oder Hartlötmaterial (61) gefüllt ist.

5. Verfahren nach Anspruch 4, wobei mindestens eine Seitenwand des topfförmigen, ausgesparten Steckbereichs (30) schräg verläuft, insbesondere in Bezug auf eine Richtung senkrecht zur Haupterstreckungsebene (M) der Sammelschiene (1).

6. Verfahren nach einem der vorhergehenden Ansprüche, wobei von der Außenfläche (60) der Sammelschiene (1) überstehendes Löt- und/oder Hartlötmaterial (61) entfernt wird.

7. Verfahren nach einem der vorhergehenden Ansprüche, wobei der Steckbereich (30) ein Loch (31) aufweist, wobei eine Form des Lochs (31) an eine Form des Kontaktelements des elektronischen Bauteils (5) angepasst ist, insbesondere derart, dass das Kontaktelement nach einem Schlüssel-Schloss-Prinzip in das Loch (31) einsteckbar ist.

8. Verfahren nach einem der vorhergehenden Ansprüche, wobei sich das Löt- und/oder Hartlötmaterial (61) durch das Loch (31) erstreckt.

9. Verfahren nach einem der vorhergehenden Ansprüche, wobei in einer Richtung senkrecht zu der ersten Ebene (11) und der zweiten Ebene (12) ein Abstand (D1) zwischen der ersten Ebene (11) und der zweiten Ebene (12) größer ist als die Hälfte einer Dicke (D) der ersten leitfähigen Schicht (10), vorzugsweise größer als die Dicke (D) der ersten leitfähigen Schicht (10) und besonders bevorzugt größer als die doppelte Dicke (D) der ersten leitfähigen Schicht (10).

10. Verfahren nach einem der vorhergehenden Ansprüche, wobei ein weiteres Bauteil (63) neben der dem elektronischen Bauteil (61) abgewandten Außenfläche (60) der Sammelschiene (1) angeordnet wird.

11. Verfahren nach einem der vorhergehenden Ansprüche, wobei die Sammelschiene (1) eine zweite leitfähige Schicht (20) umfasst, die durch eine Isolationsschicht (15) von der ersten leitfähigen Schicht (10) beabstandet ist, wobei der ausgesparte Steckbereich (30) für die zweite leitfähige Schicht (20) durch eine weitere Aussparung (50) in der ersten leitfähigen Schicht (10) und/oder der Isolationsschicht (15) gebildet wird, wobei die zweite leitfähige Schicht (20) zwischen der ersten leitfähigen Schicht (10) und dem elektronischen Bauteil (5) angeordnet ist.

12. Verfahren nach einem der vorhergehenden Ansprüche, wobei das Kontaktelement mit dem Steckbereich (30) automatisch durch einen Roboter verlötet wird.

13. Verfahren nach einem der vorhergehenden Ansprüche, wobei das Kontaktelement ein Stift (2) ist und der Stift (2)
- vor dem Löten gebogen und/oder geschnitten wird und/oder
- innerhalb des Steckbereichs (30) angeordnet wird, ohne aus der Außenfläche (60) der Sammelschiene (1) herauszuragen.

14. Verfahren nach einem der vorhergehenden Ansprüche, wobei der ausgesparte Steckbereich (30) vollständig mit Löt- und/oder Hartlötmaterial (61) gefüllt wird.

15. Flache Sammelschiene (1), insbesondere eine laminierte Sammelschiene, die zur Montage eines elektronischen Bauteils (5) auf einer solchen Sammelschiene (1) ausgebildet ist, mit mindestens einem Steckbereich (30), der zum Einstecken eines Kontaktelements des elektronischen Bauteils (5), insbesondere eines Stifts (2) des elektronischen Bauteils (5), in den mindestens einen Steckbereich (30) ausgebildet ist, wobei der mindestens eine Steckbereich (30) als ausgesparter Steckbereich (30) ausgebildet ist, wobei der ausgesparte Steckbereich (30) mit einem Löt- und/oder Hartlötmaterial (61) gefüllt ist, ohne im fertigen Zustand von einer Außenfläche (60) der Sammelschiene (1) abzustehen, wobei die Außenfläche (60) von dem elektronischen Bauteil (5) abgewandt ist.

16. System umfassend eine Sammelschiene (1) und ein elektronisches Bauteil (5), wobei das elektronische Bauteil (5) mit der Sammelschiene (1) durch ein Verfahren nach einem der vorhergehenden Ansprüche verbunden ist.

## Revendications

1. Procédé de connexion d'un composant électrique (5) à une barre collectrice (1), en particulier à une barre collectrice stratifiée (1), la barre collectrice (1) étant configurée pour le montage du composant électronique (5) sur la barre collectrice (1) et présentant au moins une zone d'enfichage (30) configurée pour l'insertion d'un élément de contact du composant électronique (5), en particulier d'une broche (2) du composant électronique (5), dans ladite au moins une zone d'enfichage (30), ladite au moins une zone d'enfichage (30) étant réalisée sous la forme d'une zone d'enfichage évidée (30), consistant à :
- insérer un élément de contact dans ladite au moins une zone d'enfichage (30), et
- utiliser un matériau de soudage et/ou de brasage (61) pour souder l'élément de contact à la barre collectrice (1),
dans lequel la zone d'enfichage évidée (30) est remplie du matériau de soudage et/ou de brasage (61) sans dépasser d'une surface extérieure (60) de la barre collectrice (1) dans un état fini, la surface extérieure (60) étant détournée du composant électronique (5).

2. Procédé selon la revendication 1, dans lequel la barre collectrice (1) comprend une première couche conductrice (10), la première couche conductrice (10) associée à la zone d'enfichage (30) s'étendant dans un premier plan (11), et la zone d'enfichage (30) s'étendant dans un deuxième plan (12), le premier plan (11) et le deuxième plan (12) étant espacés l'un de l'autre dans une direction perpendiculaire au premier plan (11) et au deuxième plan (12), pour former la zone d'enfichage évidée (30).

3. Procédé selon l'une des revendications précédentes, dans lequel la zone d'enfichage (30) est au moins partiellement entourée par au moins un évidement (4), l'évidement (4) s'étendant de préférence entre le premier plan (11) et le deuxième plan (12).

4. Procédé selon l'une des revendications précédentes, dans lequel la zone d'enfichage évidée (30) est en forme de pot et est au moins partiellement remplie du matériau de soudage et/ou de brasage (61).

5. Procédé selon la revendication 4, dans lequel au moins une paroi latérale de la zone d'enfichage évidée (30) en forme de pot s'étend en oblique, en particulier par rapport à une direction perpendiculaire au plan d'extension principale (M) de la barre collectrice (1).

6. Procédé selon l'une des revendications précédentes, dans lequel le matériau de soudage et/ou de brasage (61) dépassant de la surface extérieure (60) de la barre collectrice (1) est enlevé.

7. Procédé selon l'une des revendications précédentes, dans lequel la zone d'enfichage (30) comprend un trou (31), une forme du trou (31) étant adaptée à une forme de l'élément de contact du composant électronique (5), en particulier de telle sorte que l'élément de contact puisse être inséré dans le trou (31) selon un principe de verrouillage par clé.

8. Procédé selon l'une des revendications précédentes, dans lequel le matériau de soudage et/ou de brasage (61) s'étend à travers le trou (31).

9. Procédé selon l'une des revendications précédentes, dans lequel dans une direction perpendiculaire au premier plan (11) et au deuxième plan (12), une distance (D1) entre le premier plan (11) et le deuxième plan (12) est supérieure à la moitié d'une épaisseur (D) de la première couche conductrice (10), de préférence supérieure à l'épaisseur (D) de la première couche conductrice (10) et de manière particulièrement préférée supérieure au double de l'épaisseur (D) de la première couche conductrice (10).

10. Procédé selon l'une des revendications précédentes, dans lequel un autre composant (63) est disposé à côté de la surface extérieure (60) de la barre collectrice (1) détournée du composant électronique (61).

11. Procédé selon l'une des revendications précédentes, dans lequel la barre collectrice (1) comprend une deuxième couche conductrice (20) espacée de la première couche conductrice (10) par une couche d'isolation (15), la zone d'enfichage évidée (30) pour la deuxième couche conductrice (20) étant formée par un autre évidement (50) dans la première couche conductrice (10) et/ou dans la couche d'isolation (15), la deuxième couche conductrice (20) étant disposée entre la première couche conductrice (10) et le composant électronique (5).

12. Procédé selon l'une des revendications précédentes, dans lequel l'élément de contact est soudé à la zone d'enfichage (30) automatiquement par un robot.

13. Procédé selon l'une des revendications précédentes, dans lequel l'élément de contact est une broche (2), et la broche (2)
- est pliée et/ou coupée avant le soudage, et/ou
- est disposée à l'intérieur de la zone évidée (30) sans dépasser de la surface extérieure (60) de la barre collectrice (1).

14. Procédé selon l'une des revendications précédentes, dans lequel la zone d'enfichage évidée (30) est entièrement remplie de matériau de soudage et/ou de brasage (61).

15. Barre collectrice plate (1), en particulier barre collectrice stratifiée, configurée pour le montage d'un composant électronique (5) sur une telle barre collectrice (1), comprenant au moins une zone d'enfichage (30) configurée pour l'insertion d'un élément de contact du composant électronique (5), en particulier d'une broche (2) du composant électronique (5), dans ladite au moins une zone d'enfichage (30), ladite au moins une zone d'enfichage (30) étant formée comme une zone d'enfichage évidée (30), la zone d'enfichage évidée (30) étant remplie d'un matériau de soudage et/ou de brasage (61) sans dépasser d'une surface extérieure (60) de la barre collectrice (1) dans un état fini, la surface extérieure (60) étant détournée du composant électronique (5).

16. Système comprenant une barre collectrice (1) et un composant électronique (5), dans lequel le composant électronique (5) est connecté à la barre collectrice (1) par un procédé selon l'une des revendications précédentes.
